# EUROPÄISCHE PATENTSCHRIFT

(11) **EP 2 899 714 B1**
(45) Veröffentlichungstag und Bekanntmachung des Hinweises auf die Patenterteilung: **16.01.2019**
(21) Anmeldenummer: 14187945.2
(22) Anmeldetag: 07.10.2014
(51) Int. Cl.: G09C 1/00, H04L 9/08

(54) **Gesichertes Bereitstellen eines Schlüssels**
Secure provision of a key
Préparation sécurisée d'une clé

(30) Priorität: 23.12.2013 DE 102013227087
(43) Veröffentlichungstag der Anmeldung: 29.07.2015
(73) Patentinhaber: Siemens Aktiengesellschaft, 80333 München (DE)
(72) Erfinder: Falk, Rainer, 85586 Poing (DE)

(56) Entgegenhaltungen:
- US-A1- 2003 102 493
- US-A1- 2007 101 122
- US-A1- 2012 137 137
- US-B1- 8 423 789
- FALK RAINER: "Meta-PUF (Meta Physical Unclonable Function)", PRIOR ART PUBLISHING, PRIOR ART PUBLISHING, DIEFFENBACHSTRASSE 33 , D-10967 BERLIN, GERMANY, 26 September 2012 (2012-09-26), XP040573331, DOI: 10.4421/PAPDEOTT001041 [retrieved on 2012-09-27]

## Beschreibung

Die Erfindung betrifft ein Verfahren sowie einen Digitalschaltungsbereich zum gesicherten Bereitstellen eines Schlüssels mit einer Anforderungseinheit und einer Bereitstellungseinheit.

Für industrielle Anwendungen werden in Steuerungsanlagen Steuerungsgeräte eingesetzt. Diese sind als eingebettete Steuerungsgeräte bekannt. Dabei kann ein komplexes Gesamtsystem durch die Vernetzung mehrerer eingebetteter Einzelsysteme oder sogenannter Embedded Systems aufgebaut sein. Häufig werden für eingebettete Systeme sogenannte Systems on Chip oder kurz SoC zur Realisierung verwendet. Oftmals enthält ein System on Chip dabei eine Hauptprozessoreinheit oder Central Processing Unit, kurz CPU, und einen integrierten Digitalschaltkreis, in den eine logische Schaltung konfiguriert bzw. programmiert werden kann, ein sogenannter Field Programmable Gate Array FPGA. In dem System on Chip werden somit unterschiedliche Funktionen auf einem Halbleiter-Schaltkreis integriert. Speicher wie beispielsweise Random Access Memory-Speicher, kurz RAM, oder Flash-Speicher oder Electrically Erasable Programmable Read Only Memories, kurz EEPROM, werden dabei häufig als separate Bausteine realisiert. Es ist ebenso möglich, auch diese zu integrieren. Eine Hauptprozessoreinheit kann dabei als feste Funktionseinheit eines Systems on Chip als sogenannter Hard Core vorgesehen sein. Ebenso ist es möglich, eine Hauptprozessoreinheit als konfigurierbare Logik als Teil der konfigurierbaren logischen Schaltung, d.h. als sogenannten Soft Core, zu realisieren.

Eine Software, beispielsweise embedded Linux, wird dabei zur Ausführung eines Programmes durch einen Prozessor, d.h. der Hauptprozessoreinheit, ausgeführt.

Für zahlreiche Anwendungsfälle, in denen ein Programm durch einen Prozessor eines System on Chip oder allgemein eines Digitalschaltungsbereichs ausgeführt wird, wird kryptographisches Schlüsselmaterial verwendet. Dies kann insbesondere durch Security- oder Safety-Anforderungen gefordert sein.

Dabei ist es aus dem Stand der Technik bekannt, kryptographische Schlüssel als Teil der Software oder als Teil von Konfigurationsdaten der Software zu speichern. Das Schlüsselmaterial ist in diesen Fällen jedoch kaum geschützt. Ein Schlüssel kann in einer Softwareumgebung versteckt werden durch sogenannte White-Box-Cryptography-Methoden. Dabei ist die Software als solche leicht angreifbar, auslesbar oder manipulierbar. Das Schlüsselmaterial ist damit nicht sehr gut vor Angriffen geschützt.

Es ist außerdem bekannt, zu einem Chip einen sogenannten Companion Chip bereitzustellen, der eine Authentisierung durchführt. Dabei wird mit kryptographischen Berechnungen die Berechtigung eines Chips geprüft, beispielsweise um einen Nachbau oder eine unberechtigte Kopie des Chips zu erkennen oder um einen unberechtigten Zugriff zu verhindern. Der Companion Chip ist dabei ein extern befindlicher, d.h. physikalisch separater Authentisierungschip. Dabei ist die Datenschnittstelle zwischen dem Chip und dem Companion Chip einem Angreifer leicht zugänglich und die Kommunikation daher einfach abhörbar oder manipulierbar.

Externe Authentisierungschips können dabei eine Schlüsselableitung durchführen, welche auf Anfrage einen Schlüssel aus gewünschten Eingabeparametern bereitstellen.

Aus der Veröffentlichungsfassung US 2003/0102493 A1 ist eine Schlüsselgenerierung bekannt, bei der ein Identifizierer eines Schaltkreises als Parameter eingeht.

Das Patent US 8 423 789 B1 zeigt die Bereitstellung von Schlüsseln zur Ver- und Entschlüsselung eines Datenspeicherlaufwerks. In die Schlüsselableitung gehen Sicherheitsparameter, ein geheimer Schlüssel und eine Seriennummer ein.

In der Veröffentlichgungsfassung US 2007/0101122 A1 ist eine Schlüsselableitung von Sitzungsschlüsseln innerhalb eines Sicherheitsmodules beschrieben.

Vor diesem Hintergrund ist es eine Aufgabe der vorliegenden Erfindung, einen abgeleiteten Schlüssel gesichert bereitzustellen.

Diese Aufgabe wird durch die angegebenen unabhängigen Ansprüche gelöst. Vorteilhafte Ausgestaltungen und Weiterbildungen sind in den Unteransprüchen angegeben.

Die Erfindung betrifft ein Verfahren zum gesicherten Bereitstellen eines abgeleiteten Schlüssels mit einer Anforderungseinheit und einer Bereitstellungseinheit, welche in einem gemeinsamen Digitalschaltungsbereich realisiert sind, aufweisend die folgenden Schritte:
a) Anfordern des abgeleiteten Schlüssels durch die Anforderungseinheit bei der Bereitstellungseinheit;
b) Übermitteln des durch die Anforderungseinheit vorgebbaren ersten Parameters von der Anforderungseinheit an die Bereitstellungseinheit;
c) Bestimmen eines geheimen Schlüssels durch die Bereitstellungseinheit, wobei der Anforderungseinheit kein Zugriff auf den geheimen Schlüssel ermöglicht wird;
d) Generieren des abgeleiteten Schlüssels durch die Bereitstellungseinheit mittels einer Schlüsselableitungsfunktion in einem Schlüsselableitungsmodul aus dem geheimen Schlüssel, dem ersten Parameter und einem vorgegebenen zweiten Parameter, wobei der zweite Parameter durch die Anforderungseinheit unvorgebbar für die Schlüsselableitungsfunktion verwendet wird;
e) Bereitstellen des abgeleiteten Schlüssels an die Anforderungseinheit.

Unter einem Schlüssel wird in der vorliegenden Anmeldung kryptographisches Schlüsselmaterial verstanden. Es kann sich dabei insbesondere um einen symmetrischen Schlüssel handeln.

Unter einem Digitalschaltungsbereich wird in der vorliegenden Anmeldung insbesondere eine programmierbare bzw. konfigurierbare Logikgatter-Anordnung oder ein Field Programmable Gate Array, kurz FPGA, oder ein anwendungsspezifisch integrierter Halbleiterbaustein oder Application Specific Integrated Circuit, kurz ASIC, ver-standen.

Unter einer Schlüsselableitungsfunktion wird vorliegend insbesondere eine Einwegfunktion verstanden, insbesondere eine Hash-Funktion (SHA1, SHA2, SHA3) oder eine keyed-Hashfunktion (HMAC) oder eine Prüfsummen-Berechnungsfunktion (AES-CBCMAC), welche aus einem vorhandenen kryptographischen Schlüssel einen abgeleiteten Schlüssel ableitet. Dabei kann es sich beispielsweise um die Ableitung eines zweckgebundenen Schlüssels handeln oder um eine Schlüsselvervielfältigung.

Unter den beschriebenen Eingabeparametern, wie insbesondere dem ersten Parameter, dem zweiten Parameter und dem geheimen Schlüssel werden Eingabewerte für die Schlüsselableitungsfunktion verstanden.

Mittels des vorgestellten Verfahrens wird eine Schlüsselableitung innerhalb eines Digitalschaltungsbereiches ermöglicht. Eine Anforderungseinheit, welcher der abgeleitete Schlüssel bereitgestellt wird, gibt dabei den ersten Parameter selbst vor. Über diesen ersten Parameter ist eine Anforderung des abgeleiteten Schlüssels insbesondere zu einem bestimmten Zweck möglich. Dieser Zweck kann insbesondere in dem ersten Parameter codiert sein. Ferner kann die Anforderungseinheit das Bereitstellen eines weiteren abgeleiteten Schlüssels, beispielsweise zu einem späteren Zeitpunkt, über die Vorgabe des ersten Parameters steuern. Der erste Parameter kann beispielsweise durch inkrementieren verändert werden und so eine weitere oder erneute Anfrage kennzeichnen.

Zusätzlich zu dem ersten Parameter geht in die Schlüsselableitungsfunktion zum Generieren des abgeleiteten Schlüssels ferner ein zweiter Parameter ein. Dieser zweite Parameter wird durch die Bereitstellungseinheit bestimmt und für die Schlüsselableitungsfunktion verwendet und kann nicht durch die Anforderungseinheit festgelegt werden, d.h. eine Vorgabe des zweiten Parameters durch die Anforderungseinheit ist nicht möglich. Unvorgebbar bedeutet dabei insbesondere, dass der zweite Parameter nicht durch die Anforderungseinheit vorgegeben oder verändert werden kann oder der zweite Parameter nicht durch einen Ersatzparameter der Anforderungseinheit ersetzt werden kann. Insbesondere wird der zweite Parameter vollständig durch die Bereitstellungseinheit vorgegeben. Insbesondere wird der Anforderungseinheit der zweite Parameter nicht bekannt oder die Anforderungseinheit kann den zweiten Parameter nicht abfragen. In einer anderen Variante ist der zweite Parameter durch die Anforderungseinheit abfragbar, jedoch nicht vorgebbar. Ferner ist vorteilhafterweise ein Rückschluss ausgehend von dem bereitgestellten abgeleiteten Schlüssel auf die verwendeten Parameter und damit insbesondere den zweiten Parameter nicht möglich.

In einer weiteren Variante ist der zweite Parameter durch die Anforderungseinheit zwar nicht vorgebbar, jedoch aktualisierbar. Somit ist nicht der Wert des zweiten Parameters als solcher vorgebbar oder vollständig vorgebbar, aber der Wert wird in Abhängigkeit von einer Vorgabe der Anforderungseinheit generiert. Die Anforderungseinheit kann dabei eine Aktualisierung des zweiten Parameters anstoßen und optional einen Aktualisierungsparameter bereitstellen. Insbesondere wird auch in dieser Ausführung des Verfahrens der zweite Parameter im Wert letztendlich durch die Bereitstellungseinheit festgelegt oder bestimmt. Beispielsweise wird der zweite Parameter durch die Bereitstellungseinheit in Abhängigkeit von einem Aktualisierungsparameter generiert. Hierbei kann der aktualisierte zweite Parameter der Anforderungseinheit bereitgestellt oder auch nicht bereitgestellt werden. In einer weiteren Variante wird der Anforderungseinheit ein von dem zweiten Parameter abgeleiteter Parameterreferenzwert bereitgestellt.

Somit ist kein externer Schlüsselspeicher nötig. Außerdem ist keine aufwändige Integration eines externen Schlüsselableitungsmoduls nötig. Während bei einer Realisierung einer Schlüsselableitung auf einem externen Chip insbesondere die Übermittlung der Eingabeparameter und des abgeleiteten Schlüsselmaterials gesichert werden muss, ist die Sicherheit des Schlüsselbereitstellungsverfahrens wie hier beschrieben bei geringerem Ressourcenbedarf und ohne Integra-tionsaufwand externer Ressourcen gleichzeitig höher.

Die Anforderungseinheit, bei welcher es sich beispielsweise um einen Hauptprozessor handelt, hat keinen Zugriff auf den im Funktionsblock der Bereitstellungseinheit enthaltenen geheimen Schlüssel. Die Anforderungseinheit kann nicht für beliebig selbst wählbare Ableitungsparameter einen aus dem geheimen Schlüssel abgeleiteten Schlüssel anfordern, da die Bereitstellungseinheit zwangsweise zusätzlich zu dem ersten Parameter als Ableitungsparameter einen zweiten Parameter verwendet. Durch das interne Einbinden des zweiten Parametes innerhalb der Bereitstellungseinheit wird die Missbrauchsmöglichkeit der Bereitstellungseinheit durch manipulierte oder nicht vertrauenswürdige Programme, welche beispielsweise auf einem Prozessor des Digitalschaltungsbereichs ausgeführt werden und welche mittels der Anforderungseinheit einen abgeleiteten Schlüssel anfragen, verringert.

Dies ist besonders vorteilhaft, wenn der geheime Schlüssel auf mehreren Geräten mit jeweiligen Digitalschaltungsbereichen identisch ist. Dies ist insbesondere der Fall, wenn in der Fertigung identische FPGA-Programmierdaten, sogenannte Bitstreams, verwendet werden, um ein Schlüsselmanagement zu vereinfachen. Durch den zwangsweise vorgegebenen zweiten Parameter kann auch in diesen Fällen sichergestellt werden, dass ein Schlüssel nicht missbräuchlich abgeleitet wird. Insbesondere ist der abgeleitete Schlüssel für ein bestimmtes Gerät bzw. einen bestimmten Digitalschaltungsbereich spezifisch. Er kann damit insbesondere nicht missbräuchlich auf anderen Digitalschaltungsbereichen bzw. Geräten verwendet werden.

Das beschriebene Verfahren stellt eine sogenannte Hardware-verankerung der Security bereit. Hardware-Verankerung bedeutet, dass insbesondere kryptographische Schlüssel oder die Ableitung kryptographischer Schlüssel eine Verankerung zu der Hardware aufweisen, auf welcher sie verwendet werden. Die Hardware-Verankerung kann eine Security- oder Safety-Anforderung an einen Digitalschaltungsbereich sein. So wird eine höhere Angriffsrobustheit erreicht als durch eine reine Software-Lösung. Das Verwenden der Bereitstellungseinheit als Security-Funktionsblock innerhalb des Digitalschaltungsbereichs bietet einerseits eine hohe Sicherheit aufgrund der Hardware-Verankerung, andererseits eine hohe Sicherheit aufgrund der Realisierung innerhalb des Digitalschaltungsbereichs, beispielsweise eines Systems on Chip, ohne Integrationslösungen eines separaten Security Controllers. Damit ist bei geringem Integrationsaufwand die Sicherheit gegenüber bekannten Verfahren dennoch erhöht. Es sind vorteilhafterweise keine zugänglichen Leitungen, die bei der Integration externer Security Controller vorliegen müssen, erforderlich.

Durch die zwangsweise Verwendung eines vorgegebenen, nicht von der Anforderungseinheit bestimmbaren oder festsetzbaren Parameters, kann beispielsweise eine Hauptprozessoreinheit, welche auch die Anforderungseinheit umfasst, nicht für beliebig wählbare Ableitungsparameter einen abgeleiteten Schlüssel anfordern. Wird auf der Hauptprozessoreinheit beispielsweise manipulierte Software ausgeführt, so kann aufgrund der Kontrolle eines Angreifers über die Software der Hauptprozessoreinheit dennoch nicht geheimes Schlüsselmaterial ausgespäht werden oder die Schlüsselableitung durch den Angreifer kontrolliert werden. Insbesondere ist in dem Fall, dass ein Angreifer Zugriff auf Schlüsselmaterial oder auf eine Schlüsselableitungsfunktion eines Exemplars einer Geräteserie hat, dennoch nicht die Sicherheit des Schlüsselmaterials eines anderen Exemplars dieser Geräteserie gefährdet, selbst wenn beispielsweise der geheime Schlüssel als Teil eines FPGA BitStreams als Konfigurationsfile eines FPGAs enthalten ist und dieser Bit-Stream auf mehreren Exemplaren einer Geräteserie identisch eingespielt wird.

Gemäß einer Ausgestaltung wird der zweite Parameter durch die Anforderungseinheit unbeeinflussbar für die Schlüsselableitungsfunktion verwendet. Unbeeinflussbar bedeutet dabei, dass keine Abhängigkeit des zweiten Parameters von einer Größe oder einem Wert oder einer Eigenschaft der Anforderungseinheit besteht oder möglich ist. Somit hat die Anforderungseinheit keinerlei Möglichkeit, auf den zweiten Parameter Einfluss zu haben. Unbeeinflussbar bedeutet dabei insbesondere, dass der zweite Parameter nicht durch die Anforderungseinheit vorgegeben oder verändert werden kann oder der zweite Parameter nicht durch einen Ersatzparameter der Anforderungseinheit ersetzt werden kann. Der zweite Parameter wird insbesondere vollständig durch die Bereitstellungseinheit ohne Einfluss durch die Anforderungseinheit vorgegeben.

Gemäß einer Ausgestaltung wird die Anforderungseinheit als eine Hauptprozessoreinheit des Digitalschaltungsbereichs ausgestaltet und der Digitalschaltungsbereich als ein System on Chip ausgestaltet.

Somit wird für ein System on Chip mit einem programmierbaren Digitalschaltungsbereich und einer programmierbaren Softwareausführungsumgebung, nämlich der Hauptprozessoreinheit, die Bereitstellungseinheit als eine Art Security-Funktionsblock realisiert. Der Security-Funktionsblock ist ebenfalls auf dem Digitalschaltungsbereich realisiert und stellt insbesondere der Anforderungseinheit des Hauptprozessors des Systems on Chip einen abgeleiteten Schlüssel bereit. Die Bereitstellungseinheit oder der Security-Funktionsblock führt somit die Schlüsselableitung intern auf dem gemeinsamen Digitalschaltungsbereich unter Verwendung eines im Funktionsblock selbst enthaltenen kryptographischen, geheimen Schlüssels durch.

Insbesondere enthalten übliche Realisierungen von FPGAs keinen nicht-flüchtigen Speicher, sodass für das nicht flüchtige Speichern von Daten ein separater Speicherbaustein benötigt würde. Somit müsste der geheime Schlüssel in einem externen Schlüsselspeicher hinterlegt werden, was die Sicherheit des Schlüsselableitungsverfahrens und damit der Bereitstellung des kryptographischen Schlüsselmaterials herabsetzt. Es ist jedoch auch eine Realisierungsvariante denkbar, bei der der für die Schlüsselableitung verwendete Schlüssel z.B. von einem externen Speicherbaustein in verschlüsselter Form eingelesen wird und mittels eines internen Schlüssels des Security-Funktionsblocks entschlüsselt wird. Der derart entschlüsselte Schlüssel kann dann wie oben beschrieben als geheimer Schlüssel zur Schlüsselableitung verwendet werden.

Gemäß einer Ausgestaltung wird die Anforderungseinheit als eine Hauptprozessoreinheit und die Hauptprozessoreinheit als Soft-Hauptprozessoreinheit in einer programmierbaren Logikgatteranordnung ausgestaltet.

Die Hauptprozessoreinheit eines Systems ist insbesondere Angriffen ausgesetzt, welche auf eine Manipulation der auf der Hauptprozessoreinheit ausgeführten Software zielen. Daher kann auf einem System on Chip nicht gesichert davon ausgegangen werden, dass die Einheit, welcher ein Schlüssel bereitgestellt wird, vertrauenswürdig ist. Gemäß dem beschriebenen Verfahren wird auch bei der Annahme, dass eine Anforderungseinheit nicht vertrauenswürdig ist, ein abgeleiteter Schlüssel gesichert bereitgestellt, da der zweite Parameter auch durch eine nicht vertrauenswürdige oder manipulierte Anforderungseinheit nur eingeschränkt oder gar nicht beeinflusst wird. Die Schlüsselableitung kann somit nicht vollständig durch die Hauptprozessoreinheit kontrolliert werden.

Somit ist ein System on Chip, welches auf einem FPGA realisiert ist, vor unberechtigtem Zugriff auf kryptographisches Schlüsselmaterial gesichert. Dies gilt insbesondere für eine Realisierung der Hauptprozessoreinheit als Soft-Hauptprozessoreinheit oder Soft-CPU, welche auf dem FPGA realisiert ist.

Gemäß einer Ausgestaltung wird der zweite Parameter aus einem Identifizierer, einem Speicherinhalt, einem über eine Schnittstelle ermittelten Datensatz oder aus einer Zufallszahl abgeleitet.

Damit kann der zweite Parameter mit seiner Eigenschaft, durch die Anforderungseinheit nicht vorgebbar zu sein oder von der Anforderungseinheit völlig unbeeinflusst verwendet zu werden, ferner in Abhängigkeit von spezifischen Daten durch die Bereitstellungseinheit generiert werden. Geht ein Identifizierer in die Ermittlung des zweiten Parameters ein, so wird der abgeleitete Schlüssel insbesondere für das Exemplar oder das Gerät, auf welchem der Digitalschaltungsbereich eingerichtet ist, individualisiert. Es kann sich bei dem Identifizierer um eine Chip-Identifizierungskennung, eine Seriennummer oder um eine Kennung handeln, welche durch die Challenge-Response Befragung einer physikalisch unklonbaren Funktion oder Physically Unclonable Function erzeugt wird. Ferner kann ein Speicherinhalt eines Konfigurationsspeichers oder Programmspeichers, oder der Speicherinhalt eines verbundenen Peripheriegerätes, wie insbesondere eines Sensors, eines Aktors oder einer Speicherkarte, in die Generierung des zweiten Parameters eingeben. Außerdem ist die Abhängigkeit von einer Zufallszahl vorteilhaft, insbesondere für die Schlüsseldiversifizierung. Der zweite Parameter kann von einem oder mehreren der beschriebenen Varianten abhängen oder direkt aus einem oder mehreren der beschriebenen Varianten abgeleitet werden.

Gemäß einer Ausgestaltung wird der Anforderungseinheit ferner der zweite Parameter bereitgestellt. Somit kann insbesondere die Schlüsselableitung der Bereitstellungseinheit gegengeprüft werden.

Gemäß einer Ausgestaltung wird die Schlüsselableitungsfunktion als eine Hash-Funktion, wie z.B. SHA-256, SHA-3, oder eine Schlüssel-Hash-Funktion, eine sogenannte Keyed Hash Function, wie z.B. HMAC-SHA256, oder eine kryptographische Prüfsummenrechnung, wie z.B. AES-CBCMAC, oder als spezielle Schlüsselableitungsfunktion, wie HKDF oder PBKDF, ausgestaltet. Damit wird durch die Eigenschaft der Schlüsselableitungsfunktion, eine Einwegfunktion zu sein, auf vorteilhafte Weise verhindert, dass aus dem abgeleiteten Schlüssel Rückschlüsse gezogen werden können auf den geheimen Schlüssel oder auf eingehende Parameter.

Gemäß einer Weiterbildung wird die Schlüsselableitungsfunktion auf den geheimen Schlüssel und eine Konkatenation des ersten Parameters mit dem zweiten Parameter angewendet oder verkettet angewendet mit einer ersten Anwendung auf den geheimen Schlüssel und den zweiten Parameter und mit einer zweiten Anwendung auf das Ergebnis der ersten Anwendung und den ersten Parameter.

Somit können unterschiedliche Schritte durchgeführt werden, um die Schlüsselableitung mit mehreren Schlüsselableitungsparametern durchzuführen. Insbesondere sind die Vorgabe und die Reihenfolge der Parameter vorteilhaft steuerbar.

Gemäß einer Weiterbildung wird der abgeleitete Schlüssel ferner aus einem aktualisierbaren dritten Parameter abgeleitet, welcher in Abhängigkeit von einem von der Anforderungseinheit bereitgestellten Ableitungsparameter durch die Bereitstellungseinheit ermittelt wird. Somit kann zusätzlich durch die Anforderungseinheit eine Abhängigkeit von einem Zeitstempel oder einem Zeitrang gefordert werden. Dabei kann insbesondere durch die Anforderungseinheit eine Rohinformation über einen Zeitpunkt oder Zeitrang an die Bereitstellungseinheit übermittelt werden. Aus dieser zeitlichen Information, deren Einfluss auf den abgeleiteten Schlüssel durch die Anforderungseinheit gefordert wird, ermittelt die Bereitstellungseinheit den dritten Parameter. Damit wird der dritte Parameter durch die Bereitstellungseinheit oder den Security-Funktions¬block verwaltet, d.h. der dritte Parameter, welcher der Schlüsselableitungsfunktion als Eingabeparameter zusätzlich übergeben wird, ist nur unter Kontrolle der Bereitstellungseinheit aktualisierbar. Das Aktualisieren kann ein direktes oder erstmaliges Setzen des dritten Parameters sein, z. B. wenn noch kein dritter Parameter gesetzt wurde. Insbesondere kann der Aktualisierungsparameter direkt als dritter Parameter verwendet werden.

In einer anderen Variante erfolgt ein Aktualisieren, indem der dritte Parameter abhängig von dem von der Anforderungseinheit bereitgestellten Aktualisierungsparameter modifiziert wird. Dabei können wiederum bekannte Schlüsselableitungsfunktionen eingesetzt werden. Ein vorhandener Initialisierungsparameter wird dabei lediglich durch den Aktualisierungsparameter modifiziert, beispielsweise durch Konkatenation. Der dritte Parameter kann zwangsweise oder wahlweise unter Kontrolle der Anforderungseinheit bei der Schlüsselableitung verwendet werden.

Gemäß einer Ausgestaltung wird der Aktualisierungsparameter eingeschränkt verwendet, insbesondere durch eine Zeitspanne oder eine Häufigkeit einer Verwendung des Aktualisierungsparameters. Die Einschränkung kann insbesondere darin bestehen, ein Setzen oder Schreiben nur einmalig zu ermöglichen. Ferner ist es möglich, mehrmaliges Setzen so lange zu ermöglichen, bis ein Write Lock oder eine Schreibsperre gesetzt wird. Ferner ist es in einer vorteilhaft Variante nur möglich, einen Aktualisierungsparameter in Abhängigkeit von einem initialen Aktualisierungswert zu generieren. Ein neuer, aktueller Aktualisierungsparameter wird somit immer in Abhängigkeit von einem zuvor gültigen Aktualisierungswert erstellt. Auch hierfür sind ähnliche Berechnungsverfahren vorteilhaft anzuwenden, beispielsweise keyed Hash Message Authentication Code-Verfahren. Somit wird insbesondere verhindert, dass ein früherer Zeitrang vorgetäuscht wird, zu welchem eine Schlüsselableitung erfolgen soll.

Die Erfindung betrifft ferner einen Digitalschaltungsbereich umfassend eine Anforderungseinheit zum Anfordern eines abgeleiteten Schlüssels bei einer Bereitstellungseinheit zum Übermitteln eines durch die Anforderungseinheit vorgebbaren ersten Parameters an die Bereitstellungseinheit sowie umfassend die Bereitstellungseinheit zum Bestimmen eines geheimen Schlüssels, wobei ein Zugriff auf den geheimen Schlüssel durch die Anforderungseinheit verhinderbar ist, zum Generieren des abgeleiteten Schlüssels mittels einer Schlüsselableitungsfunktion in einem Schlüsselableitungsmodul aus dem geheimen Schlüssel, dem ersten Parameter und einem vorgegebenen zweiten Parameter, wobei der zweite Parameter durch die Anforderungseinheit unvorgebbar für die Schlüsselableitungsfunktion verwendbar ist und zum Bereitstellen des abgeleiteten Schlüssels an die Anforderungseinheit.

Die Erfindung wird nachfolgend mit Ausführungsbeispielen anhand der Figuren näher erläutert.

Es zeigen:
- Figur 1: eine schematische Darstellung eines Digitalschaltungsbereichs zur Ausführung des Verfahrens gemäß einem ersten Ausführungsbeispiel der Erfindung;
- Figur 2: eine schematische Darstellung einer Bereitstellungseinheit zur Durchführung des Verfahrens gemäß einem zweiten Ausführungsbeispiel der Erfindung.

In einem ersten Ausführungsbeispiel der Erfindung wird eine vorteilhafte Realisierung des Verfahrens zum gesicherten Bereitstellen eines Schlüssels auf einen Digitalschaltungsbereich 100 vorgestellt. Es handelt sich bei dem Digitalschaltungsbereich 100 um ein System on Chip SOC oder einen System on Chip-Baustein. Insbesondere fungiert eine Hauptprozessoreinheit CPU als Anforderungseinheit 102 eines kryptographischen abgeleiteten Schlüssels 11. Die Hauptprozessoreinheit CPU sendet dafür eine Anfrage an eine Bereitstellungseinheit 101 innerhalb des gemeinsamen Digitalschaltungsbereichs 100. Die Bereitstellungseinheit 101 ist somit auch in das System on Chip SOC integriert. Die Hauptprozessoreinheit CPU übergibt dabei einen vorgebbaren ersten Parameter 1. Dieser erste Parameter 1 wird durch die Hauptprozessoreinheit CPU gewählt und kann insbesondere eine Angabe enthalten über einen Verwendungszweck des angeforderten Schlüssels. Es kann sich ferner ebenso um eine durchlaufende Nummerierung der Schlüsselanfragen durch die Hauptprozessoreinheit CPU handeln.

Die Bereitstellungseinheit 101 nimmt die Anfrage sowie den ersten Parameter 1 entgegen. Die Bereitstellungseinheit 101 ist damit ein Funktionsblock innerhalb des Systems on Chip SOC, in welchem die Schlüsselableitung auf Anfrage durchgeführt wird. Die Bereitstellungseinheit 101 enthält insbesondere den geheimen Schlüssel 4. Innerhalb der Bereitstellungseinheit 101 ist ein Schlüsselableitungsmodul 110 vorgesehen. Auf diesem Schlüsselableitungsmodul 110 ist eine Schlüsselableitungsfunktion 10 realisiert. Das Schlüsselableitungsmodul 110 ist als programmierbarer Bereich innerhalb des Systems on Chip als ein Teilbereich innerhalb des FPGA ausgestaltet, auf dem die gesamte Bereitstellungseinheit realisiert ist.

Es handelt sich bei der Schlüsselableitungsfunktion 10 um eine Hashfunktion wie SHA1, SHA2 oder SHA3. Neben dem geheimen Schlüssel 4 werden der Schlüsselableitungsfunktion 10 der erste Parameter 1 vorgegeben sowie ein zweiter Parameter 2. Dieser zweite Parameter 2 ist der Anforderungseinheit 102 weder bekannt, noch kann die Anforderungseinheit 102 Kenntnis über den zweiten Parameter 2 erhalten. Er ist somit nicht durch die Anforderungseinheit 102 beeinflussbar und wird unabhängig von der Anforderungseinheit 102, wie hier der Hauptprozessoreinheit CPU, verwendet. Zusätzlich ist der zweite Parameter 2 unabhängig von dem ersten Parameter 1 und der Anfrage durch die Hauptprozessoreinheit CPU.

Die Bereitstellungseinheit 101 generiert auf Basis des geheimen Schlüssels 4, des ersten Parameters 1 sowie des zweiten Parameters 2 den abgeleiteten Schlüssel 11 und stellt diesen der Anforderungseinheit 102 bereit. Der abgeleitete Schlüssel 11 wird beispielsweise für die Verschlüsselung von Daten wie Messdaten oder Diagnosedaten, welche über eine Datenschnittstelle des Systems on Chip bereitgestellt werden, an die Anforderungseinheit ausgegeben und verwendet.

Ferner können mittels des abgeleiteten Schlüssels 11 auf dem System on Chip SOC gespeicherte Konfigurationsdaten auf ihre Integrität hin überprüft werden, indem eine kryptographische Prüfsumme berechnet wird. Dafür ist die Schlüsselableitung durch die Bereitstellungseinheit 101 reproduzierbar ausgestaltet. Beispielsweise wird bei Vorgabe eines identischen ersten Parameters 1 der zweite Parameter 2 identisch verwendet, sowie der Eingabeparameter aus dem geheimen Schlüssel 4 identisch verwendet. Geht in die Prüfsummenberechnung gespeicherter Konfigurationsdaten der abgeleitete Schlüssel 11 ein, so kann zu einem späteren Zeitpunkt eine identische Prüfsumme mittels des wiederum abgeleiteten und somit reproduzierten abgeleiteten Schlüssels 11 nur generiert werden, falls die Konfigurationsdaten unversehrt und nicht manipuliert sind.

Die Hauptprozessoreinheit CPU, die auf den Funktionsblock zugreift, kann als Soft-CPU, d.h. als Teil des Bitsreams realisiert sein, z.B. über NIOS2, Picoblaze, Microblaze, Lattice Mico8 etc., oder als Hard-CPU auf einem FPGA realisiert sein, d.h. als fest in Hardware vorgesehene Funktion, z.B. auf Xilinx Zynq oder Altera Cyclone V SoC.

In einer Variante kann auch ein extern gespeicherter Datensatz, wie beispielsweise Konfigurationsdaten, welche auf einem Konfigurations-EEPROM hinterlegt sind, gesichert entschlüsselt oder gesichert eingelesen werden. Dafür wird auf der Bereitstellungseinheit ein Configuration Encryption Key oder ein Konfigurationsschlüssel erzeugt, in welchen als Parameter der geheime Schlüssel sowie ein durch die Bereitstellungseinheit verpflichtend vorgegebener zweiter Parameter eingehen. Für diese Variante wird der erste Parameter durch die Anforderungseinheit, die dann die Schnittstelle zur externen Einheit ist, vorgegeben. Beispielsweise wird die Anfrage zur Anforderung des Schlüssels dann über eine externe Schnittstelle an die Bereitstellungseinheit weitergeleitet.

Der erste Parameter ist also von derjenigen Einheit wählbar oder vorgebbar, die einen Schlüssel anfordert, sei es von innerhalb des Digitalschaltungskreises oder von außerhalb. Die Anforderungseinheit kann somit auch eine Funktion einer Schnittstelle sein, die den abgeleiteten Schlüssel für eine externe Einheit anfordert.

Durch den zweiten Parameter, der nicht von dieser anfragenden Einheit auswählbar ist, wird eine Zuordnung des abgeleiteten Schlüssels zur tatsächlichen Hardware-Plattform erreicht. Es wird also eine Bindung des abgeleiteten Schlüssels an die Hardware-Plattform realisiert. Die anfragende Einheit kann damit nur einen Schlüssel für diejenige Hardware erhalten, auf der die Funktion der Schlüsselableitung tatsächlich realisiert ist. Es ist nicht möglich, einen Schlüssel eines anderen Hardware-Exemplars anzufordern. Selbst wenn ein Hacker also ein Gerät erfolgreich kompromittiert hat, beispielsweise durch Schadsoftware oder durch Root-Zugriff, so kann er nur die Schlüssel des gehackten Gerätes bestimmen. Er kann nicht den Systemschlüssel als geheimen Schlüssel auslesen und durch die Erfindung kann er insbesondere auch keine Schlüssel für andere Geräte bestimmen.

In einer weiteren Variante verfügt die Bereitstellungseinheit über mehrere Schnittstellen, die jeweils von einer Anforderungseinheit nutzbar sind. Hierbei ist es möglich, dass der zweite Parameter abhängig von der Schnittstelle gewählt wird. Dies hat den Vorteil, dass eine einzelne Bereitstellungseinheit durch mehrere Anforderungseinheiten nutzbar ist, wobei einer ersten Anforderungseinheit und einer zweiten Anforderungseinheiten nur unterschiedlich abgeleitete Schlüssel bereitgestellt werden. Dabei bedeutet unterschiedlich abgeleitet, dass ein erster Schnittstellenableitungsparameter als zweiter Parameter bei Anfrage durch die erste Anforderungseinheiten über die erste Schnittstelle verwendet wird, und dass ein zweiter Schnittstellenableitungsparameter als zweiter Parameter bei Anfrage durch die zweite Anforderungseinheiten über die zweite Schnittstelle verwendet wird.

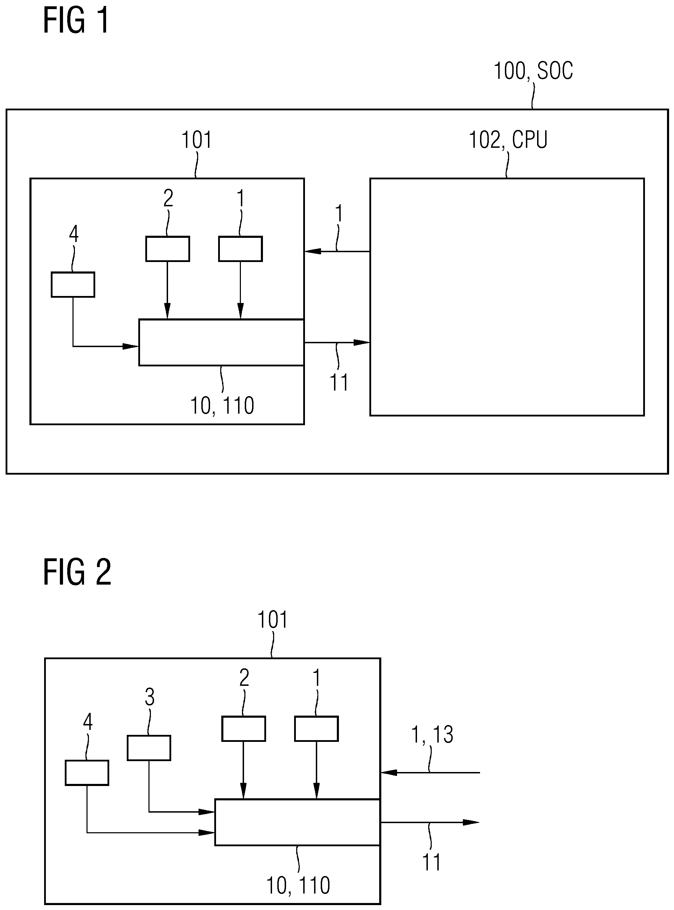

Anhand von Figur 2 wird ein zweites Ausführungsbeispiel beschrieben, bei welchem eine Bereitstellungseinheit 101 zum Generieren des abgeleiteten Schlüssels 11 zusätzlich einen dritten aktualisierbaren Parameter 3 berücksichtigt. Dafür wird der Bereitstellungseinheit 101 von einer Anforderungseinheit innerhalb eines Digitalschaltungsbereichs ein erster Parameter 1 vorgegeben sowie ein Aktualisierungsparameter 13 bereitgestellt. In einem Schlüsselableitungsmodul 110 der Bereitstellungseinheit 101 wird mittels einer Schlüsselableitungsfunktion 10 der abgeleitete Schlüssel 11 generiert. Es gehen als Eingabeparameter für die Schlüsselableitungsfunktion 10 der erste Parameter 1, der zweite Parameter 2, der dritte Parameter 3 sowie ein geheimer Schlüssel 4 ein. Bei dem zweiten Parameter 2 handelt es sich wie oben beschrieben um einen Ableitungsparameter, der durch die Bereitstellungseinheit 101 vorgegeben wird und nicht durch die Anforderungseinheit beeinflussbar ist. Dieser zweite Parameter 2 geht direkt in die Schlüsselableitung ein. Aus dem bereitgestellten Aktualisierungsparameter 13 wird der dritte Parameter 3 durch die Bereitstellungseinheit 101 generiert. Beispielsweise wird ein standardmäßig vorhandener Rohparameter aktualisiert und modifiziert, indem er mit dem Aktualisierungsparameter 13 verknüpft wird und anschließend eine Schlüssel-Hashfunktion oder Keyed Hash Function, kurz HMAC, angewendet wird. Somit hängt der Wert des dritten Parameters 3 von dem Aktualisierungsparameter 13, welcher durch die Anforderungseinheit gestellt wird, und von der Prüfsummenbildung der Bereitstellungseinheit 101 ab.

Die Erzeugung des dritten Parameters 3 geschieht somit unter Kontrolle der Bereitstellungseinheit 101. Beispielsweise ist das Erzeugen des dritten Parameters 3 nur ein einziges Mal möglich, indem ein Aktualisierungsparameter 13 nur einmal bereitgestellt werden kann. Somit kann beispielsweise auf vorteilhafte Weise während eines Bootvorgangs ein Schlüssel erzeugt werden, welcher zur Durchführung des Bootvorganges nötig ist. Zu einem späteren Zeitpunkt kann dieser Schlüssel allerdings nicht mehr erzeugt werden, weil der Aktualisierungsparameter 13 nur einmalig ausgegeben werden konnte. Somit kann eine Zeitphase hergestellt werden, innerhalb derer ein spezifischer Schlüssel abgeleitet werden kann. Der Schlüssel ist dann an den Aktualisierungsparameter 13 fest gebunden. Insbesondere kann das Erzeugen dieses spezifischen Schlüssels erste bei einem erneuten Bootvorgang wieder durchgeführt werden.

Es kann überdies vorgegeben sein, dass als Aktualisierungsparameter 13 ein von einer Hauptprozessoreinheit wählbarer Aktualisierungswert innerhalb einer vorgegebenen Zeitspanne ausgegeben werden kann. Dabei kann insbesondere eine typische Zeitspanne angegeben werden, innerhalb derer das Ausführen der Schlüsselableitung unbedenklich ist und nach der der Bootvorgang als abgeschlossen anzunehmen ist.

Innerhalb des Betriebssystem-Kernels kann der abgeleitete Schlüssel 11 ferner zum Laden und Entschlüsseln oder Überprüfen von kryptographisch geschützten Konfigurationsdaten aus einem Konfigurationsspeicher oder einem Dateisystem verwendet werden.

Ferner kann der abgeleitete Schlüssel 11 für Applikationsprogramme angefordert werden, beispielsweise zum Öffnen eines Key Stores, d. h. um verschlüsselte Schlüsseldaten mittels des bereitgestellten Schlüssels zu entschlüsseln.

Mit dem abgeleiteten Schlüssel 11 kann ferner ein Bootimage, welches verschlüsselt vorliegt, entschlüsselt werden. Somit wird der abgeleitete Schlüssel 11 für die Funktion des Boot Loaders zur Verfügung gestellt.

Beispielsweise wird für die Realisierung der FPGA-Konfiguration zur Ausführung des Verfahrens gemäß dem zweiten Ausführungsbeispiel bei einem Systemstart eines Systems mit der Bereitstellungseinheit 101 die Konfiguration als Bit-stream von einem externen Speicher in einen internen Konfigurationsspeicher des Systems übertragen. Vorzugsweise ist die Bitstream-Konfiguration kryptographisch geschützt, insbesondere liegt der Bitstream verschlüsselt vor oder ist um eine kryptographische Prüfsumme erweitert. Der FPGA-Baustein entschlüsselt den geladenen verschlüsselten Bitstream und konfiguriert die internen Hardware-Konfigurationsblöcke entsprechend dem geladenen Bitstream. Die Konfiguration kann ferner auch in Form eines ungeschützten Bitstreams oder in Form von Konfigurationsdaten auf den FPGA-Baustein geladen werden. Sie kann ferner ebenso in einer Variante eine feste Funktion eines ASICs sein.

Die beschriebene Bereitstellungseinheit 101 ist für den Fall, dass die Konfiguration als Bitstream vorliegt, vorzugsweise als Security-Funktionsblock als ein Teil des Bitstreams realisiert. Er kann beispielsweise in VHDL, Verilog oder System C erstellt sein. Die einzelnen Funktionen können direkt als Digitallogik im Register Transfer Level, kurz RTL, realisiert sein.

Das Entschlüsseln eines Bitstreams ist insbesondere eine feste, vorgegebene Funktion eines FPGAs. Der dazu verwendete Schlüssel ist konfigurierbar. Ausgehend von einem vorkonfigurierten Schlüssel wird in einer Variante der abgeleitete Schlüssel 11 wie oben beschrieben durch die Bereitstellungseinheit 101 bestimmt. Ferner kann zusätzlich oder stattdessen auch ein fester, d.h. vom FPGA-Hersteller bestimmbarer Schlüssel in die Schlüsselableitung eingehen. Der Bitstream wird dann mit dem abgeleiteten Schlüssel 11 entschlüsselt. Da ein Bitstream spezifisch für jedes Exemplar eines FPGA-Bausteins verschlüsselt wird, um korrekt auf diesem entschlüsselbar zu sein, wird beispielsweise durch den FPGA-Hersteller ein Exemplar-spezifischer Schlüssel eines FPGA-Bausteins einem Gerätehersteller zur Verfügung gestellt. Dies kann z.B. auf Papier, über ein Web-Portal, oder mittels eines ungesperrten auslesbaren FPGA-Bausteines geschehen. Letzteres heißt, dass der FPGA Baustein so wie er ausgeliefert wird den Schlüssel bereitstellt, dies nach Brennen einer Fuse jedoch nicht mehr möglich ist. Dadurch wird ein wirkungsvoller Kopierschutz erzielt.

Mit dem vorgestellten Verfahren und dem Digitalschaltungsbereich wird ein Schlüssel aus Parametern abgeleitet, von denen mindestens ein Parameter durch die Anforderungseinheit unvorgebbar für die Schlüsselableitung verwendet wird.

## Patentansprüche

1. Verfahren zum gesicherten Bereitstellen eines abgeleiteten Schlüssels mit einer Anforderungseinheit (102) und einer Bereitstellungseinheit (101), welche in einem gemeinsamen Digitalschaltungsbereich (100) realisiert sind, aufweisend die folgenden Schritte:
a) Anfordern des abgeleiteten Schlüssels (11) durch die Anforderungseinheit (102) bei der Bereitstellungseinheit (101) ;
b) Übermitteln eines durch die Anforderungseinheit (102) vorgebbaren ersten Parameters (1) von der Anforderungseinheit (102) an die Bereitstellungseinheit (101);
c) Bestimmen eines geheimen Schlüssels (4) durch die Bereitstellungseinheit (101), wobei der Anforderungseinheit (102) kein Zugriff auf den geheimen Schlüssel (4) ermöglicht wird;
d) Generieren des abgeleiteten Schlüssels (11) durch die Bereitstellungseinheit (101) mittels einer Schlüsselableitungsfunktion (10) in einem Schlüsselableitungsmodul (110) aus dem geheimen Schlüssel (4), dem ersten Parameter (1) und einem vorgegebenen zweiten Parameter (2), wobei der zweite Parameter (2) durch die Anforderungseinheit (102) unvorgebbar für die Schlüsselableitungsfunktion (10) verwendet wird;
e) Bereitstellen des abgeleiteten Schlüssels (11) an die Anforderungseinheit (102);
wobei die Bereitstellungseinheit (101) mehrere Schnittstellen aufweist, die jeweils von einer Anforderungseinheit (102) nutzbar sind, wobei der zweite Parameter (2) abhängig von der Schnittstelle gewählt wird, wobei einer ersten Anforderungseinheit (102) und einer zweiten Anforderungseinheiten (102) nur unterschiedlich abgeleitete Schlüssel (11) bereitgestellt werden, wobei unterschiedlich abgeleitet bedeutet, dass ein erster Schnittstellenableitungsparameter als zweiter Parameter (2) bei Anfrage durch die erste Anforderungseinheiten (102) über die erste Schnittstelle verwendet wird, und dass ein zweiter Schnittstellenableitungsparameter als zweiter Parameter (2) bei Anfrage durch die zweite Anforderungseinheiten (102) über die zweite Schnittstelle verwendet wird.

2. Verfahren nach Anspruch 1, wobei der zweite Parameter (2) durch die Anforderungseinheit (102) unbeeinflussbar für die Schlüsselableitungsfunktion (10) verwendet wird.

3. Verfahren nach Anspruch 1 oder 2, wobei die Anforderungseinheit (102) als eine Hauptprozessoreinheit (CPU) des Digitalschaltungsbereiches (100) ausgestaltet wird und wobei der Digitalschaltungsbereich (100) als ein System on Chip (SOC) ausgestaltet wird.

4. Verfahren nach einem der vorstehenden Ansprüche, wobei die Anforderungseinheit (102) als eine Hauptprozessoreinheit (CPU) und wobei die Hauptprozessoreinheit (CPU) als Soft-Hauptprozessoreinheit in einer programmierbaren Logikgatter-Anordnung ausgestaltet wird.

5. Verfahren nach einem der vorstehenden Ansprüche, wobei der zweite Parameter (2) aus einem Identifizierer, einem Speicherinhalt, einem über eine Schnittstelle ermittelten Datensatz oder aus einer Zufallszahl abgeleitet wird.

6. Verfahren nach einem der vorstehenden Ansprüche, wobei der Anforderungseinheit (102) ferner der zweite Parameter (2) bereitgestellt wird.

7. Verfahren nach einem der vorstehenden Ansprüche, wobei die Schlüsselableitungsfunktion (10) als eine Hashfunktion oder eine Schlüssel-Hashfunktion oder eine kryptographische Prüfsummenberechnung ausgestaltet wird.

8. Verfahren nach einem der vorstehenden Ansprüche, wobei die Schlüsselableitungsfunktion (10) auf den geheimen Schlüssel (4) und eine Konkatenation des ersten Parameters (1) mit dem zweiten Parameter (2) angewendet wird oder wobei die Schlüsselableitungsfunktion (10) verkettet angewendet wird mit einer ersten Anwendung auf den geheimen Schlüssel (4) und den zweiten Parameter (2) und mit einer zweiten Anwendung auf das Ergebnis der ersten Anwendung und den ersten Parameter (1).

9. Verfahren nach einem der vorstehenden Ansprüche, wobei der abgeleitete Schlüssel (11) ferner aus einem aktualisierbaren dritten Parameter (3) abgeleitet wird, welcher in Abhängigkeit von einem von der Anforderungseinheit (102) bereitgestellten Aktualisierungsparameter (13) durch die Bereitstellungseinheit (101) ermittelt wird.

10. Verfahren nach Anspruch 9, wobei der Aktualisierungsparameter (13) eingeschränkt, insbesondere durch eine Zeitspanne oder eine Häufigkeit einer Verwendung des Aktualisierungsparameters (13) eingeschränkt, verwendet wird.

11. Digitalschaltungsbereich (100), umfassend
- eine Anforderungseinheit (102)
zum Anfordern eines abgeleiteten Schlüssels (11) bei einer Bereitstellungseinheit (101) und
zum Übermitteln eines durch die Anforderungseinheit (102) vorgebbaren ersten Parameters (1) an die Bereitstellungseinheit (101);
- die Bereitstellungseinheit (101)
zum Bestimmen eines geheimen Schlüssels (4), wobei ein Zugriff auf den geheimen Schlüssel (4) durch die Anforderungseinheit (102) verhinderbar ist,
zum Generieren des abgeleiteten Schlüssels (11) mittels einer Schlüsselableitungsfunktion (10) in einem Schlüsselableitungsmodul (110) aus dem geheimen Schlüssel (4), dem ersten Parameter (1) und einem vorgegebenen zweiten Parameter (2), wobei der zweite Parameter (2) durch die Anforderungseinheit (102) unvorgebbar für die Schlüsselableitungsfunktion (10) verwendbar ist und
zum Bereitstellen des abgeleiteten Schlüssels (11) an die Anforderungseinheit (102);
wobei die Bereitstellungseinheit (101) mehrere Schnittstellen aufweist, die jeweils von einer Anforderungseinheit (102) nutzbar sind, wobei der zweite Parameter (2) abhängig von der Schnittstelle gewählt ist, wobei die Bereitstellungseinheit (101) ausgebildet ist, einer ersten Anforderungseinheit (102) und einer zweiten Anforderungseinheiten (102) nur unterschiedlich abgeleitete Schlüssel (11) bereitzustellen, wobei unterschiedlich abgeleitet bedeutet, dass ein erster Schnittstellenableitungsparameter als zweiter Parameter (2) bei Anfrage durch die erste Anforderungseinheiten (102) über die erste Schnittstelle verwendet wird, und dass ein zweiter Schnittstellenableitungsparameter als zweiter Parameter (2) bei Anfrage durch die zweite Anforderungseinheiten (102) über die zweite Schnittstelle verwendet wird.

12. Digitalschaltungsbereich (100) nach Anspruch 11, wobei der zweite Parameter (2) durch die Anforderungseinheit (102) unbeeinflussbar für die Schlüsselableitungsfunktion (10) verwendbar ist.

13. Digitalschaltungsbereich (100) nach Anspruch 11 oder 12, wobei die Anforderungseinheit (102) als eine Hauptprozessoreinheit (CPU) des Digitalschaltungsbereiches (100) ausgestaltbar ist und wobei der Digitalschaltungsbereich (100) als ein System in Chip (SOC) ausgestaltbar ist.

14. Digitalschaltungsbereich (100) nach einem der Ansprüche 11 bis 13, wobei die Anforderungseinheit (102) als eine Hauptprozessoreinheit (CPU) und wobei die Hauptprozessoreinheit (CPU) als Soft- Hauptprozessoreinheit in einer programmierbaren Logik-gatter-Anordnung ausgestaltbar ist.

15. Digitalschaltungsbereich (100) nach einem der Ansprüche 11 bis 14, wobei der zweite Parameter (2) aus einem Identifizierer, einem Speicherinhalt, einem über eine Schnittstelle ermittelten Datensatz oder aus einer Zufallszahl ableitbar ist.

16. Digitalschaltungsbereich (100) nach einem der Ansprüche 11 bis 15, wobei der Anforderungseinheit (102) ferner der zweite Parameter (2) bereitstellbar ist.

17. Digitalschaltungsbereich (100) nach einem der Ansprüche 11 bis 16, wobei die Schlüsselableitungsfunktion (10) als eine Hashfunktion oder eine Schlüssel-Hashfunktion oder eine kryptographischen Prüfsummenberechnung ausgestaltbar ist.

18. Digitalschaltungsbereich (100) nach einem der Ansprüche 11 bis 17, wobei die Schlüsselableitungsfunktion (10) auf den geheimen Schlüssel (4) und eine Konkatenation des ersten Parameters (1) mit dem zweiten Parameter (2) anwendbar ist oder wobei die Schlüsselableitungsfunktion (10) verkettet anwendbar ist mit einer ersten Anwendung auf den geheimen Schlüssel (4) und den zweiten Parameter (2) und mit einer zweiten Anwendung auf das Ergebnis der ersten Anwendung und den ersten Parameter (1).

19. Digitalschaltungsbereich (100) nach einem der Ansprüche 11 bis 18, wobei der abgeleitete Schlüssel (11) ferner aus einem aktualisierbaren dritten Parameter (3) ableitbar ist, welcher in Abhängigkeit von einem von der Anforderungseinheit (102) bereitgestelltem Aktualisierungsparameter (13) durch die Be-reitstellungseinheit (101) ermittelbar ist.

20. Digitalschaltungsbereich (100) nach Anspruch 19, wobei der Aktualisierungsparameter (13) eingeschränkt, insbesondere durch eine Zeitspanne oder eine Häufigkeit einer Verwendung des Aktualisierungsparameters (13) eingeschränkt, verwendbar ist.

## Claims

1. Method for securely providing a derived key using a request unit (102) and a provision unit (101) which are implemented in a common digital circuit area (100), having the following steps:
a) the request unit (102) requests the derived key (11) from the provision unit (101);
b) a first parameter (1) which can be predefined by the request unit (102) is transmitted from the request unit (102) to the provision unit (101);
c) a secret key (4) is determined by the provision unit (101), the request unit (102) not being able to have any access to the secret key (4);
d) the derived key (11) is generated by the provision unit (101) by means of a key derivation function (10) in a key derivation module (110) from the secret key (4), the first parameter (1) and a predefined second parameter (2), the second parameter (2) being used for the key derivation function (10) in a non-predefinable manner by the request unit (102);
e) the request unit (102) is provided with the derived key (11); the provision unit (101) having a plurality of interfaces which can each be used by a request unit (102), the second parameter (2) being selected on the basis of the interface, only differently derived keys (11) being made available to a first request unit (102) and to a second request unit (102), differently derived meaning that a first interface derivation parameter is used as the second parameter (2) in the event of a request from the first request unit (102) via the first interface, and that a second interface derivation parameter is used as the second parameter (2) in the event of a request from the second request unit (102) via the second interface.

2. Method according to Claim 1, the second parameter (2) being used for the key derivation function (10) in a manner which cannot be influenced by the request unit (102).

3. Method according to Claim 1 or 2, the request unit (102) being in the form of a main processor unit (CPU) of the digital circuit area (100), and the digital circuit area (100) being in the form of a system on chip (SOC).

4. Method according to one of the preceding claims, the request unit (102) being in the form of a main processor unit (CPU), and the main processor unit (CPU) being in the form of a soft main processor unit in a programmable logic gate array.

5. Method according to one of the preceding claims, the second parameter (2) being derived from an identifier, memory contents, a data record determined via an interface or a random number.

6. Method according to one of the preceding claims, the request unit (102) also being provided with the second parameter (2).

7. Method according to one of the preceding claims, the key derivation function (10) being in the form of a hash function or a keyed hash function or a cryptographic checksum calculation.

8. Method according to one of the preceding claims, the key derivation function (10) being applied to the secret key (4) and a concatenation of the first parameter (1) with the second parameter (2), or the key derivation function (10) being applied in a concatenated manner with a first application to the secret key (4) and the second parameter (2) and with a second application to the result of the first application and the first parameter (1).

9. Method according to one of the preceding claims, the derived key (11) also being derived from a third parameter (3) which can be updated and is determined by the provision unit (101) on the basis of an update parameter (13) provided by the request unit (102).

10. Method according to Claim 9, the update parameter (13) being used in a restricted manner, in particular in a manner restricted by a period of time or a frequency of use of the update parameter (13).

11. Digital circuit area (100) comprising
- a request unit (102)
for requesting a derived key (11) from a provision unit (101) and
for transmitting a first parameter (1) which can be predefined by the request unit (102) to the provision unit (101) ;
- the provision unit (101)
for determining a secret key (4), access to the secret key (4) by the request unit (102) being able to be prevented,
for generating the derived key (11) by means of a key derivation function (10) in a key derivation module (110) from the secret key (4), the first parameter (1) and a predefined second parameter (2), the second parameter (2) being able to be used for the key derivation function (10) in a non-predefinable manner by the request unit (102), and
for providing the request unit (102) with the derived key (11); the provision unit (101) having a plurality of interfaces which can each be used by a request unit (102), the second parameter (2) being selected on the basis of the interface, the provision unit (101) being designed to make available only differently derived keys (11) to a first request unit (102) and to a second request unit (102), differently derived meaning that a first interface derivation parameter is used as the second parameter (2) in the event of a request from the first request unit (102) via the first interface, and that a second interface derivation parameter is used as the second parameter (2) in the event of a request from the second request unit (102) via the second interface.

12. Digital circuit area (100) according to Claim 11, the second parameter (2) being able to be used by the request unit (102) for the key derivation function (10) in a manner which cannot be influenced.

13. Digital circuit area (100) according to Claim 11 or 12, the request unit (102) being able to be in the form of a main processor unit (CPU) of the digital circuit area (100), and the digital circuit area (100) being able to be in the form of a system on chip (SOC).

14. Digital circuit area (100) according to one of Claims 11 to 13, the request unit (102) being able to be in the form of a main processor unit (CPU), and the main processor unit (CPU) being able to be in the form of a soft main processor unit in a programmable logic gate array.

15. Digital circuit area (100) according to one of Claims 11 to 14, the second parameter (2) being able to be derived from an identifier, memory contents, a data record determined via an interface or a random number.

16. Digital circuit area (100) according to one of Claims 11 to 15, the request unit (102) also being able to be provided with the second parameter (2).

17. Digital circuit area (100) according to one of Claims 11 to 16, the key derivation function (10) being able to be in the form of a hash function or a key hash function or a cryptographic checksum calculation.

18. Digital circuit area (100) according to one of Claims 11 to 17, the key derivation function (10) being able to be applied to the secret key (4) and a concatenation of the first parameter (1) with the second parameter (2), or the key derivation function (10) being able to be applied in a concatenated manner with a first application to the secret key (4) and the second parameter (2) and with a second application to the result of the first application and the first parameter (1) .

19. Digital circuit area (100) according to one of Claims 11 to 18, the derived key (11) also being able to be derived from a third parameter (3) which can be updated and can be determined by the provision unit (101) on the basis of an update parameter (13) provided by the request unit (102).

20. Digital circuit area (100) according to Claim 19, the update parameter (13) being able to be used in a restricted manner, in particular in a manner restricted by a period of time or a frequency of use of the update parameter (13).

## Revendications

1. Procédé de mise à disposition sécurisée d'une clé dérivée avec une unité de requête (102) et une unité de mise à disposition (101) qui sont réalisées dans une partie de circuit numérique commune (100), comportant les étapes suivantes :
a) requête de la clé dérivée (11) par l'unité de requête (102) auprès de l'unité de mise à disposition (101) ;
b) transmission d'un premier paramètre (1), spécifiable par l'unité de requête (102), de l'unité de requête (102) à l'unité de mise à disposition (101) ;
c) détermination d'une clé secrète (4) par l'unité de mise à disposition (101), aucun accès à la clé secrète (4) n'étant rendu possible à l'unité de requête (102) ;
d) génération de la clé dérivée (11) par l'unité de mise à disposition (101) au moyen d'une fonction de dérivation de clé (10) dans un module de dérivation de clé (110) à partir de la clé secrète (4), du premier paramètre (1) et d'un deuxième paramètre donné (2), le deuxième paramètre (2) étant utilisé par l'unité de requête (102) de manière non spécifiable pour la fonction de dérivation de clé (10) ;
e) mise à disposition de la clé dérivée (11) à l'unité de requête (102) ;
l'unité de mise à disposition (101) comportant plusieurs interfaces qui peuvent être respectivement utilisées par une unité de requête (102), le deuxième paramètre (2) étant sélectionné en fonction de l'interface, seulement des clés dérivées différemment (11) étant mises à la disposition d'une première unité de requête (102) et d'une deuxième unité de requête (102), dérivées différemment signifiant qu'un premier paramètre de dérivation d'interface est utilisé en tant que deuxième paramètre (2) en cas de requête par la première unité de requête (102) via la première interface et qu'un deuxième paramètre de dérivation d'interface est utilisé en tant que deuxième paramètre (2) en cas de requête par la deuxième unité de requête (102) via la deuxième interface.

2. Procédé selon la revendication 1, le deuxième paramètre (2) étant utilisé par l'unité de requête (102) de manière non influençable pour la fonction de dérivation de clé (10).

3. Procédé selon la revendication 1 ou 2, l'unité de requête (102) étant réalisée en tant qu'unité de processeur principal (CPU) de la partie de circuit numérique (100) et la partie de circuit numérique (100) étant réalisée en tant que System on Chip (SOC).

4. Procédé selon l'une des revendications précédentes, l'unité de requête (102) étant réalisée en tant qu'unité de processeur principal (CPU) et l'unité de processeur principal (CPU) étant réalisée en tant qu'unité de processeur principal logiciel dans un agencement de porte logique programmable.

5. Procédé selon l'une des revendications précédentes, le deuxième paramètre (2) étant dérivé d'un identifiant, d'un contenu de mémoire, d'un jeu de données déterminé via une interface ou d'un nombre aléatoire.

6. Procédé selon l'une des revendications précédentes, le deuxième paramètre (2) étant en outre mis à la disposition de l'unité de requête (102).

7. Procédé selon l'une des revendications précédentes, la fonction de dérivation de clé (10) étant réalisée en tant que fonction de hachage ou fonction de hachage de clé ou calcul de somme de contrôle cryptographique.

8. Procédé selon l'une des revendications précédentes, la fonction de dérivation de clé (10) étant appliquée à la clé secrète (4) et à une concaténation du premier paramètre (1) et du deuxième paramètre (2) ou la fonction de dérivation de clé (10) étant utilisée de manière enchaînée avec une première application à la clé secrète (4) et au deuxième paramètre (2) et avec une deuxième application au résultat de la première application et au premier paramètre (1).

9. Procédé selon l'une des revendications précédentes, la clé dérivée (11) étant en outre dérivée d'un troisième paramètre actualisable (3) qui est déterminé par l'unité de mise à disposition (101) en fonction d'un paramètre d'actualisation (13) mis à disposition par l'unité de requête (102).

10. Procédé selon la revendication 9, le paramètre d'actualisation (13) étant utilisé de manière restreinte, en particulier de manière restreinte par un laps de temps ou une fréquence d'une utilisation du paramètre d'actualisation (13) .

11. Partie de circuit numérique (100), comprenant :
- une unité de requête (102) pour demander une clé dérivée (11) à une unité de mise à disposition (101) et pour transmettre à l'unité de mise à disposition (101) un premier paramètre (1) spécifiable par l'unité de requête (102) ;
- l'unité de mise à disposition (101) pour déterminer une clé secrète (4), un accès à la clé secrète (4) pouvant être empêché par l'unité de requête (102), pour générer la clé dérivée (11) au moyen d'une fonction de dérivation de clé (10) dans un module de dérivation de clé (110) à partir de la clé secrète (4), du premier paramètre (1) et d'un deuxième paramètre donné (2), le deuxième paramètre (2) pouvant être utilisé par l'unité de requête (102) de manière non spécifiable pour la fonction de dérivation de clé (10), et pour la mise à disposition de la clé dérivée (11) à l'unité de requête (102) ;
l'unité de mise à disposition (101) comportant plusieurs interfaces qui peuvent être utilisées respectivement par une unité de requête (102), le deuxième paramètre (2) étant sélectionné en fonction de l'interface, l'unité de mise à disposition (101) étant réalisée pour mettre à la disposition d'une première unité de requête (102) et d'une deuxième unité de requête (102) seulement des clés dérivées différemment (11), dérivées différemment signifiant qu'un premier paramètre de dérivation d'interface est utilisé en tant que deuxième paramètre (2) en cas de requête par la première unité de requête (102) via la première interface et qu'un deuxième paramètre de dérivation d'interface est utilisé en tant que deuxième paramètre (2) en cas de requête par la deuxième unité de requête (102) via la deuxième interface.

12. Partie de circuit numérique (100) selon la revendication 11, le deuxième paramètre (2) pouvant être utilisé de manière non influençable par l'unité de requête (102) pour la fonction de dérivation de clé (10).

13. Partie de circuit numérique (100) selon la revendication 11 ou 12, l'unité de requête (102) pouvant être réalisée en tant qu'unité de processeur principal (CPU) de la partie de circuit numérique (100) et la partie de circuit numérique (100) pouvant être réalisée en tant que System in Chip (SOC) .

14. Partie de circuit numérique (100) selon l'une des revendications 11 à 13, l'unité de requête (102) pouvant être réalisée en tant qu'unité de processeur principal (CPU) et l'unité de processeur principal (CPU), en tant qu'unité de processeur principal logiciel dans un agencement de porte logique programmable.

15. Partie de circuit numérique (100) selon l'une des revendications 11 à 14, le deuxième paramètre (2) pouvant être dérivé d'un identifiant, d'un contenu de mémoire, d'un jeu de données déterminé via une interface ou d'un nombre aléatoire.

16. Partie de circuit numérique (100) selon l'une des revendications 11 à 15, le deuxième paramètre (2) pouvant en outre être mis à la disposition de l'unité de requête (102).

17. Partie de circuit numérique (100) selon l'une des revendications 11 à 16, la fonction de dérivation de clé (10) pouvant être réalisée en tant que fonction de hachage ou fonction de hachage de clé ou calcul de somme de contrôle cryptographique.

18. Partie de circuit numérique (100) selon l'une des revendications 11 à 17, la fonction de dérivation de clé (10) pouvant être appliquée à la clé secrète (4) et à une concaténation du premier paramètre (1) et du deuxième paramètre (2) ou la fonction de dérivation de clé (10) pouvant être utilisée de manière enchaînée avec une première application à la clé secrète (4) et au deuxième paramètre (2) et avec une deuxième application au résultat de la première application et au premier paramètre (1).

19. Partie de circuit numérique (100) selon l'une des revendications 11 à 18, la clé dérivée (11) pouvant en outre être dérivée d'un troisième paramètre actualisable (3) qui peut être déterminé par l'unité de mise à disposition (101) en fonction d'un paramètre d'actualisation (13) mis à disposition par l'unité de requête (102).

20. Partie de circuit numérique (100) selon la revendication 19, le paramètre d'actualisation (13) pouvant être utilisé de manière restreinte, en particulier de manière restreinte par un laps de temps ou une fréquence d'une utilisation du paramètre d'actualisation (13).
